# EUROPEAN PATENT APPLICATION

(11) **EP 4 632 573 A1**
(43) Date of publication of application: **15.10.2025**
(21) Application number: 25167835.5
(22) Date of filing: 01.04.2025
(51) Int. Cl.: G06F 9/50, G06F 8/71, G06F 11/30

(54) **AUTOMATED CLOUD BUILDOUT AND/OR RUN STATE MANAGEMENT USING CLOUD HOSTED ORCHESTRATION OF CONFIGURATION AND INSTALLATION OF CLOUD SERVICES**

(30) Priority: 08.04.2024 US 202418629764
(71) Applicant: Microsoft Technology Licensing, LLC, Redmond, WA 98052 (US)
(72) Inventor: RUSSELL, Brian Mark, Redmond, 98052 (US); CARROLL, Daniel John, Jr., Redmond, 98052 (US)
(74) Representative: CMS Cameron McKenna Nabarro Olswang LLP

(57) **Abstract**

Systems and methods are provided for implementing automated cloud buildout and/or run state management using cloud hosted orchestration of configuration and installation of cloud services. A configuration file, which outlines configurations and services to be applied to servers installed within a data center, is used by a computing system to orchestrate configuration or reconfiguration of the servers during buildout operations and/or run state operations of a cloud network(s). The computing system monitors for configuration changes or inconsistencies in the servers, as compared with the configuration file. If the configurations have been changed or are otherwise inconsistent with the configuration file, the computing system automatically restores, resets, or reconfigures the first servers or services/apps to be consistent with the configurations as outlined in the configuration file. A user interface may be provided to enable a user to view statuses of the buildout operations and/or the run state operations.

## Description

### BACKGROUND

Physical servers are the cradle of a new datacenter, cloud, or region buildout. Configuring these physical servers depends on on-premises work that becomes isolated to a boundary associated with the particular buildout. Standing up an environment within the boundary to begin automation can be repetitive, tedious, expensive, prone to human error, and time consuming. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for implementing automated cloud buildout and/or run state management using cloud hosted orchestration of configuration and installation of cloud services. In some examples, a configuration file, which outlines configurations and services to be applied to each of a plurality of servers that is installed within a data center, is used by a computing system to orchestrate configuration or reconfiguration of the servers (including virtual machines hosted thereon) during buildout operations and/or run state operations of a cloud network(s). The computing system or a monitoring system monitors configurations of the servers or services/apps installed thereon to determine whether changes have been made, or whether the configurations are inconsistent, as outlined in the configuration file. If changes have been made or if the configurations are otherwise determined to be inconsistent with the configuration file, the computing system automatically restores, resets, or reconfigures the servers or services/apps to be consistent with the configurations and/or services as outlined in the configuration file. The computing system accepts updated configuration files when changes to the configurations are required or requested. A user interface may be provided to enable a user(s) to view statuses of the buildout operations and/or the run state operations.

Systems and methods are provided for implementing automated cloud buildout and/or run state management using cloud hosted orchestration of configuration and installation of cloud services. A configuration file, which outlines configurations and services to be applied to servers installed within a data center, is used by a computing system to orchestrate configuration or reconfiguration of the servers during buildout operations and/or run state operations of a cloud network(s). The computing system monitors for configuration changes or inconsistencies in the servers, as compared with the configuration file. If the configurations have been changed or are otherwise inconsistent with the configuration file, the computing system automatically restores, resets, or reconfigures the first servers or services/apps to be consistent with the configurations as outlined in the configuration file. A user interface may be provided to enable a user to view statuses of the buildout operations and/or the run state operations.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing automated cloud buildout and/or run state management using cloud hosted orchestration of configuration and installation of cloud services.
Figs. 2A-2C depict various example systems and corresponding uses of example configuration files when implementing cloud buildout operations at data center, region, and country/supranational union/continent scales, respectively.
Figs. 2D and 2E depict various example systems and corresponding uses of example configuration files when implementing cloud run state operations at server and data center scales, respectively.
Fig. 3 depicts an example sequence flow for implementing automated cloud buildout and/or run state management using cloud hosted orchestration of configuration and installation of cloud services.
Figs. 4A-4D depict various example methods for implementing automated cloud buildout and/or run state management using cloud hosted orchestration of configuration and installation of cloud services.
Fig. 5 depict a block diagram illustrating example physical components of a computing device with which aspects of the technology may be practiced.

### DETAILED DESCRIPTION

As briefly discussed above, configuring physical servers of a new datacenter, cloud, or region buildout depends on on-premises work that becomes isolated to a boundary associated with the particular buildout (e.g., particular datacenter, cloud, or region). Standing up an environment within the boundary to begin automation can be repetitive, tedious, expensive, prone to human error, and time consuming. At a high level, the building of a cloud, datacenter, or region within a cloud includes many moving parts where errors could occur, and configuration creep can be introduced. As used herein, configuration creep refers to inputting of configurations (e.g., ad hoc configurations by administrators) that are not included in, are not outlined in, or are beyond a scope of the configuration file. Installation of the physical servers, imaging said servers, configuration of basic services (also referred to as "dial tone services"), and deployment of core platform services all require repeatable, standardized processes. As used herein, imaging a server refers to creating, configuring, and deploying software images (e.g., operating system images or images of other software applications) to multiple servers or virtual machines at scale.

The technology discussed herein provides desired state configurations for buildout and run state operations that allow for continued monitoring and autocorrections to configuration of servers and/or virtual machines hosted on the servers in the data center(s) for establishing or implementing the cloud network(s) if deviations are detected, thus preventing configuration errors and configuration creep. In some examples, buildout modifications are performed in a central, public cloud, using a configuration file(s), and are pushed to various clouds, thus obviating the need for administrators to logon to multiple clouds. Run state configurations can be performed in the boundary and allow for scaling within the data center, cloud, or region itself.

Various modifications and additions can be made to the embodiments discussed without departing from the scope of the disclosed techniques. For example, while the embodiments described above refer to particular features, the scope of the disclosed techniques also includes embodiments having different combination of features and embodiments that do not include all of the above-described features.

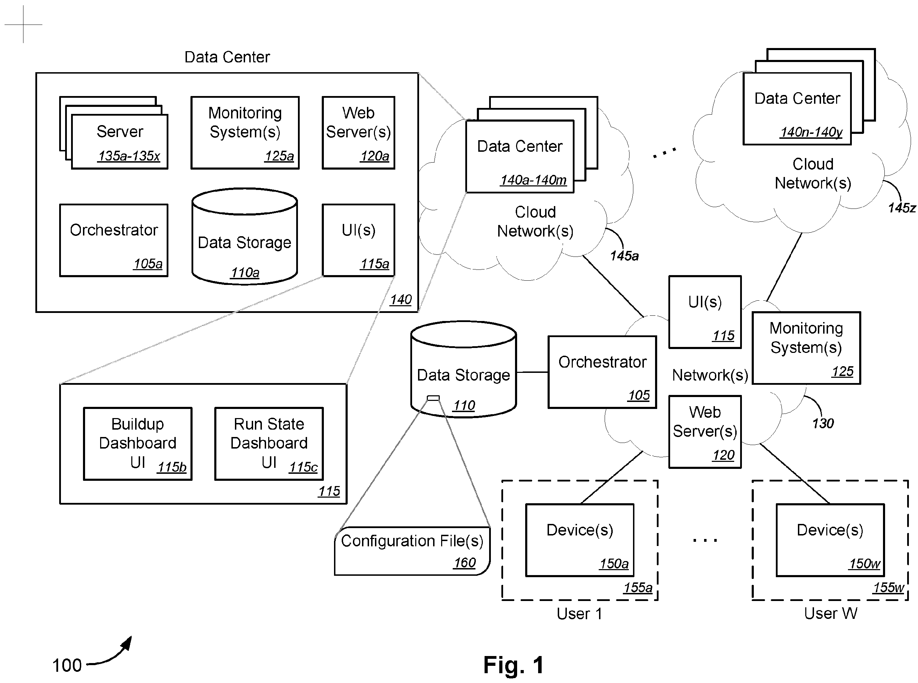

We now turn to the embodiments as illustrated by the drawings. Figs. 1-5 illustrate some of the features of a method, system, and apparatus for implementing cloud provisioning, and, more particularly, to methods, systems, and apparatuses for implementing automated cloud buildout and/or run state management using cloud hosted orchestration of configuration and installation of cloud services, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing automated cloud buildout and/or run state management using cloud hosted orchestration of configuration and installation of cloud services. System 100 includes at least one of an orchestrator 105 and corresponding data storage device 110, user interface(s) ("UI(s)") 115, web server(s) 120, or monitoring system(s) 125 disposed within or across network(s) 130. In some cases, orchestrator 105, data storage device 110, UI(s) 115, web server(s) 120, and/or monitoring system(s) 125, rather than being disposed external to a data center of a cloud network, may be disposed in each of a plurality of data centers 140a-140m and 140n-140y (collectively, "data centers 140"). For example, each data center 140 includes at least one of an orchestrator 105a, a data storage device 110a, a UI(s) 115a, a web server(s) 120a, and/or monitoring system(s) 125a, along with a plurality of servers 135a-135x (collectively, "servers 135"). In some examples, data centers 140a-140y may be distributed across multiple cloud networks 145a-145z (collectively, "cloud networks 145"). In examples, UI(s) 115a may include at least one of a buildup dashboard UI 115b or a run state dashboard UI 115c. In some instances, the buildup dashboard UI 115b and the run state dashboard UI 115c are implemented as a single integrated dashboard UI, in some cases, providing siloed access to one or both of these two dashboards to a user based on permissions, access, and/or authentication of the user. System 100 further includes devices 150a-150w (collectively, "devices 150") associated with corresponding users 1 through W 155a-155w (collectively, "users 155"). Configuration files 160 may be stored in data storage device(s) 110 and/or 110a, and may be used to configure servers (e.g., servers 135) for implementing buildout operations and/or run state operations for cloud network(s) 145. Herein, *m, n, w, x, y,* and z are non-negative integer numbers that may be either all the same as each other, all different from each other, or some combination of same and different (e.g., one set of two or more having the same values with the others having different values, a plurality of sets of two or more having the same value with the others having different values, etc.).

In examples, the orchestrator 105 or 105a configures or reconfigures servers 135a-135x in data center(s) 140a-140y to implement buildout operation and/or run state operations, based on configuration file(s) 160, and in some cases, based on changes and/or inconsistencies in the configurations and/or services installed on the servers 135a-135x with respect to the configuration file(s) 160. In some examples, the orchestrator 105 or 105a each includes one of an automation server, a desired state configuration ("DSC") server, or a cross-platform task automation server. The monitoring system(s) 125 or 125a monitors the configurations and/or services to determine or identify such changes and/or inconsistencies. In some cases, the monitoring system(s) 125 or 125a performs monitoring on a scheduled basis (e.g., particular time(s) on particular days), a periodic basis (e.g., every 15 minutes), or in response to a trigger (e.g., user input, user request, initiation of tasks, completion of tasks, deviations in power provided by a power supply, or another trigger). Web server(s) 120 or 120a may host a web portal that provides a UI (e.g., UI(s) 115 or 115a-115c, respectively) through which a user 155, via corresponding device 150, may view statuses of, and/or manage, cloud buildout operations or run state operations of cloud networks, e.g., at the server level, the data center level, and/or the cloud network level. Software applications ("apps") may alternatively, or additionally, be used to provide the UI 115 or 115a-115c. Data storage device 110 or 110a may be used to store configuration file(s) 160, and in some cases results of monitoring by the monitoring system(s) 125 or 125a. While network(s) 145a-145z are cloud networks, network(s) 130 may each include at least one of a distributed computing network (such as the Internet), a private network, a commercial network, or a cloud network.

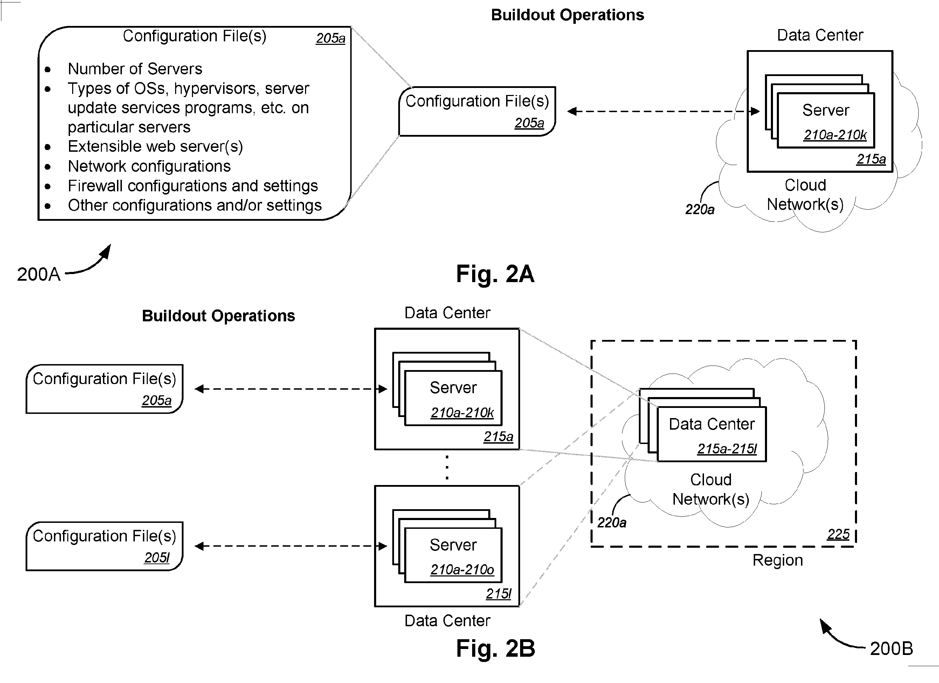

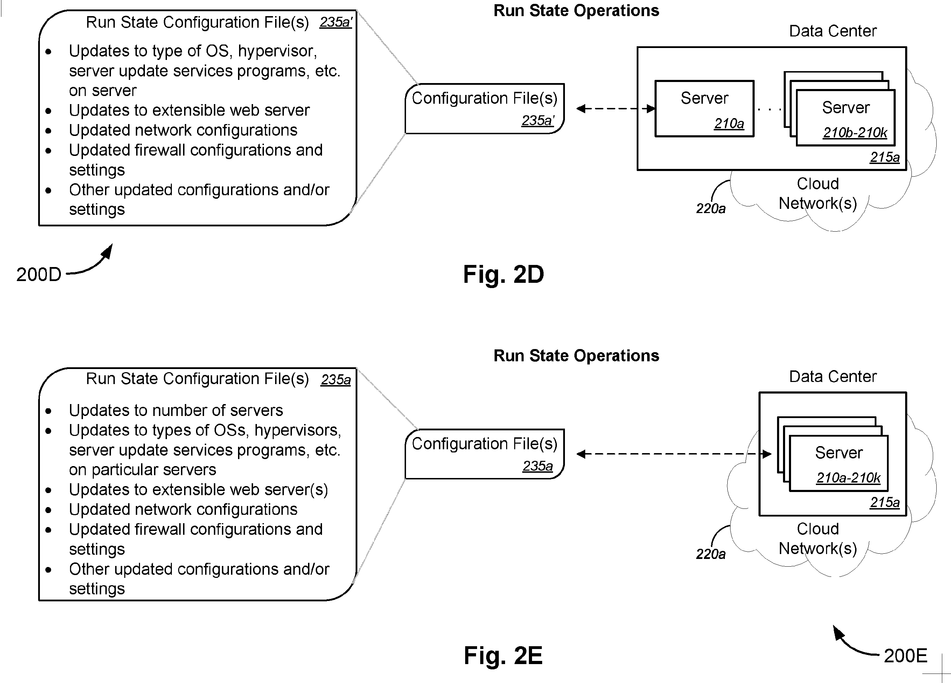

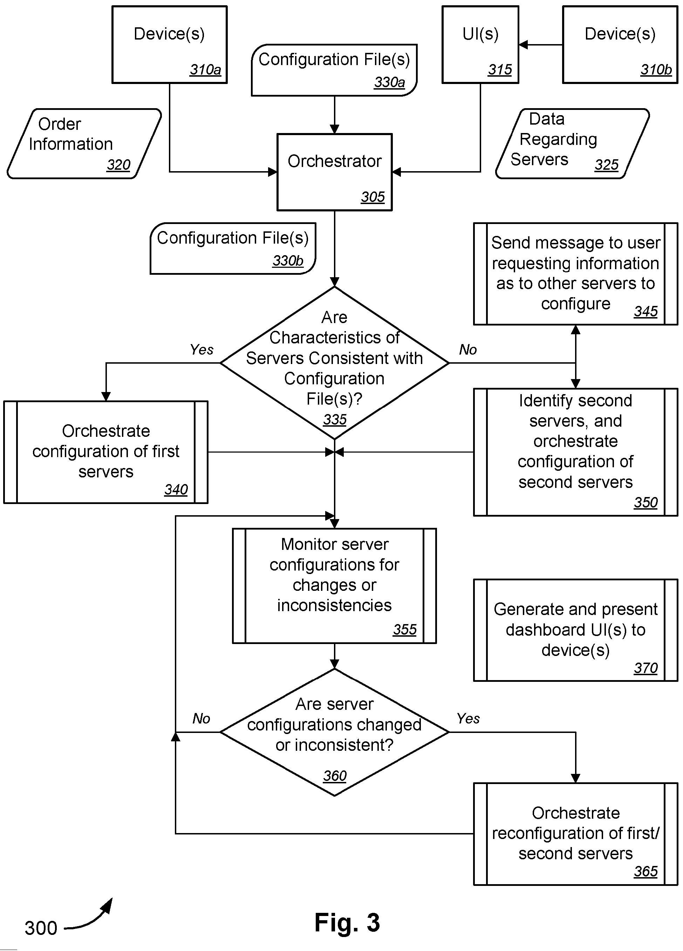

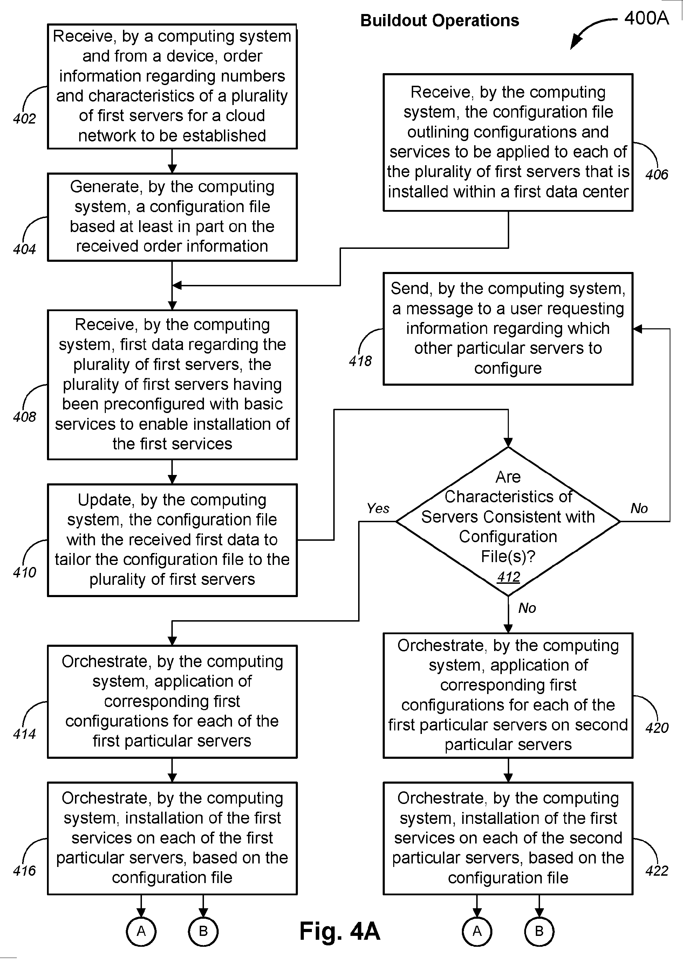

In operation, orchestrator 105 or 105a performs methods for implementing automated cloud buildout and/or run state management, as described in detail with respect to Figs. 2A-4E. For example, cloud buildout operations at a data center, a region, and a country/supranational union/continent scales and their corresponding example configuration files are as described below with respect to Figs. 2A-2C, while cloud run state operations at server and data center scales and their corresponding example configuration files are as described below with respect to Figs. 2D and 2E. For example, example sequence flow 300 and methods 400A and 400B as described below with respect to Figs. 3 and 4A-4D may be applied with respect to the operations of system 100 of Fig. 1.

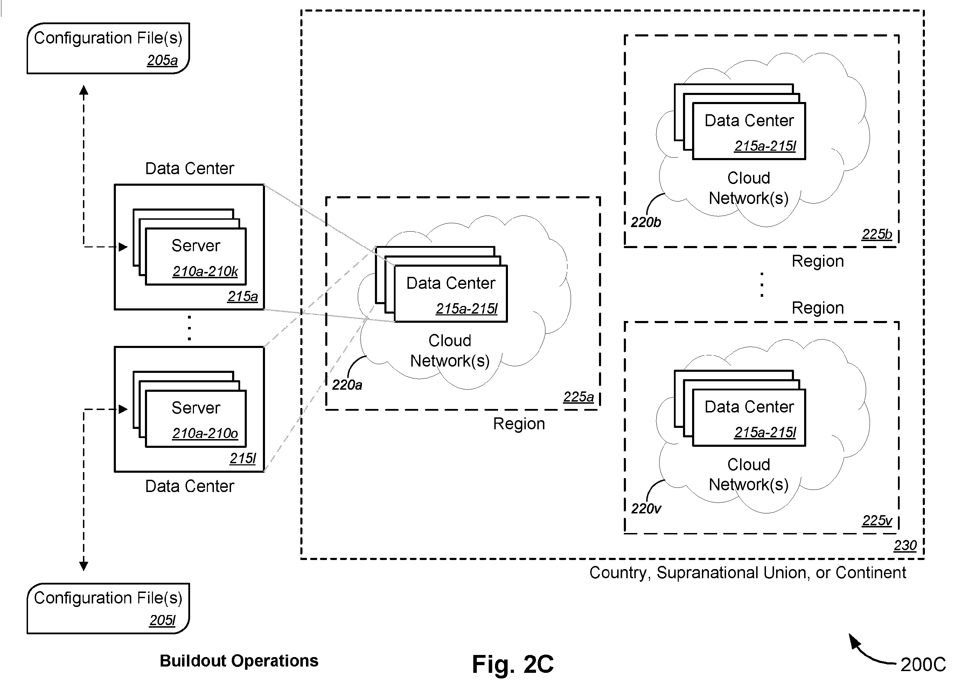

Figs. 2A-2C depict various example systems 200A-200C and corresponding uses of example configuration files when implementing cloud buildout operations at data center, region, and country/supranational union/continent scales, respectively. Figs. 2D and 2E depict various example systems 200D and 200E, and corresponding uses of example configuration files when implementing cloud run state operations at server and data center scales, respectively. In some embodiments, configuration files 205a-205l, 235a', and/or 235a, servers 210a-210k and/or 210a-210o, data centers 215a-215l, cloud network(s) 220a-220v, of Figs. 2A-2E may be similar, if not identical, to configuration file(s) 160, servers 135a-135x, data centers 140a-140m and 140n-140y, cloud network(s) 145a-145z, respectively, of system 100 of Fig. 1, and the description of these components of system 100 of Fig. 1 are similarly applicable to the corresponding components of Figs. 2A-2E. Herein, *k, l, m, n, o, v, w, x, y,* and z are non-negative integer numbers that may be either all the same as each other, all different from each other, or some combination of same and different (e.g., one set of two or more having the same values with the others having different values, a plurality of sets of two or more having the same value with the others having different values). In examples, as shown in Figs. 2A-2C, each data center 215 is disposed at a physical location and contains or houses a plurality of servers 210, while a plurality of data centers 215 may be distributed across a region 225 (as shown, e.g., in Fig. 2B). In some cases, one or more regions 225 of data centers 215 may be distributed across a country, supranatural union, or continent 230 (as shown, e.g., in Fig. 2C). In an example, a cloud network 220 may be established across one or more data centers 215 containing servers 210. In another example, a cloud network 220 may be established across one or more regions 225 of data centers 215 containing servers 210. In other examples, multiple cloud networks 220 may be established across the one or more data centers 215, across the one or more regions 225, or across the country, supranatural union, or continent 230.

Referring to the example system 200A of Fig. 2A, during buildout operations of a cloud network(s) 220a, configuration file(s) 205a outlines configurations and services to be applied to, and is used to configure, each of a plurality of first servers 210a-210k (collectively, "servers 210" or "first servers 210") that is installed at a first data center 215a. In examples, the configuration file(s) 205a includes information, configurations, and/or settings, including at least one of a number of servers, types of operating systems ("OSs") on particular servers, types of hypervisors (e.g., Hyper-V^{®} or another hypervisor) on particular servers, types of server update services programs (e.g., Windows Server Update Services ("WSUS") or similar update services) on particular servers, extensible web server(s) (e.g., Internet Information Services ("IIS") or similar servers or services), network configurations, firewall configurations and settings, and/or other configurations and/or settings.

Turning to the example system 200B of Fig. 2B, during buildout operations of a cloud network(s) 220a, configuration file(s) 205a through 2051 each outlines configurations and services to be applied to, and is used to configure, a corresponding set of a plurality of servers (e.g., servers 210a-210k or servers 210a-210o) that is installed at a corresponding data center among a plurality of data centers 215a-215l that is distributed across a region 225 and that is used to establish or implement cloud network(s) 220a across the region 225. In examples, each of configuration files 205a-205l of example 200B may be similar, if not identical, to configuration file(s) 205a of example 200A.

The example system 200C of Fig. 2C is directed to buildout operations of a plurality of cloud networks 220a-220v each spanning a corresponding one of a plurality of regions 225a-225v that is distributed across one of a country, a supranational union (e.g., the European Union), or a continent 230. During such buildout operations, configuration file(s) 205a through 2051 are used to configure a corresponding set of a plurality of servers (e.g., servers 210a-210k or servers 210a-210o) that is installed at a corresponding data center among a plurality of data centers 215a-2151 that is distributed across region 225a, in a manner that is similar, if not identical, to that as described above with respect to example 200B of Fig. 2B, and, in some cases, may be replicated or duplicated for each of the other regions 225b-225v across country, supranational union, or continent 230. Massive scale may be achieved by utilizing the same set of configuration files 205 across multiple cloud networks 220, multiple regions 225, and/or countries/supranational unions/continents 230 for implementing or building out cloud networks. In some examples, the same configuration file(s) 205 may also be used across the multiple data centers 215 within a cloud network 220.

With reference to the example system 200D, during run state operations of a cloud network(s) 220a, configuration file(s) 235a' outlines configurations and services to be applied to, and is used to configure or reconfigure, a server (e.g., server 210a) among a plurality of servers 210a-210k that has been installed in data center 215a and that has been operating post-buildup (i.e., during the run state). Configuration file(s) 235a' may be generated (or may be updated from one of configuration files 205a-205l of example systems 200A-200C of Figs. 2A-2C) based on monitored or determined changes in the server (in this example, server 210a). In examples, configuration file(s) 235a' includes updated information, configurations, and/or settings, including at least one of updates to the types of OSs on the particular server, updates to the types of hypervisors (e.g., Hyper-V^{®} or another hypervisor) on the particular server, updates to the types of server update services programs (e.g., WSUS or similar update services) on the particular servers, updates to the extensible web server(s) (e.g., IIS or similar servers or services), updated network configurations, updated firewall configurations and settings, and/or other updated configurations and/or settings.

Referring to the example system 200E, during run state operations of a cloud network(s) 220a, configuration file(s) 235a outlines configurations and services to be applied to, and is used to configure or reconfigure, the plurality of servers 210a-210k that has been installed in data center 215a and that has been operating post-buildup (i.e., during the run state). Configuration file(s) 235a may be generated (or may be updated from one of configuration files 205a-205l of example systems 200A-200C of Figs. 2A-2C) based on monitored or determined changes in the plurality of servers 210a-210k. In examples, configuration file(s) 235a' includes updated information, configurations, and/or settings, including at least one of updates to the number of servers in the data center, updates to the types of OSs on the particular server(s), updates to the types of hypervisors (e.g., Hyper-V^{®} or another hypervisor) on the particular server(s), updates to the types of server update services programs (e.g., WSUS or similar update services) on the particular servers(s), updates to the extensible web server(s) (e.g., IIS or similar servers or services), updated network configurations, updated firewall configurations and settings, and/or other updated configurations and/or settings.

In some aspects, buildout operations and run state operations include configuring or reconfiguring virtual machines ("VMs") that are hosted on the servers installed in data center(s). Configuration or reconfiguration of such VMs may be managed by the configuration files as described above. A VM, as used herein, refers to a virtual computer system that emulates the functionality of a physical computer.

These and other functions of the examples 200A-200E (and their components) are described in greater detail herein with respect to Figs. 1, 3, and 4A-4D.

Fig. 3 depicts an example sequence flow 300 for implementing automated cloud buildout and/or run state management using cloud hosted orchestration of configuration and installation of cloud services. In some embodiments, orchestrator 305, devices 310a and 310b, UI(s) 315, and configuration files 330a and 330b of Fig. 3 may be similar, if not identical, to orchestrator 105 and 105a, devices 150a-150w, UIs 115 and/or 115a, and configuration files 160, 205a-205l, 235a', and/or 235a, respectively, of system 100 of Fig. 1 or system(s) 200A-200E of Figs. 2A-2E, and the description of these components of system 100 of Fig. 1 are similarly applicable to the corresponding components of Fig. 3.

With reference to the example of Fig. 3, example sequence flow 300 begins with orchestrator 305 receiving, from device(s) 310a, order information 320 for a plurality of first servers installed in a data center. In examples, the order information includes at least one of information regarding types of services, information regarding type of operating system, information regarding a number of servers, media access control ("MAC") addresses to be assigned to the plurality of first servers, information regarding types of computing resources to be allocated to the first servers, information regarding amounts of computing resources to be allocated to the first servers, or information regarding amounts of memory or data storage resources to be allocated to the first servers. Orchestrator 305 further receives data 325 regarding the plurality of first servers from device(s) 310b via UI(s) 315. In some instances, a user(s) associated with the device(s) 310b (e.g., a service provider agent, representative, or technician) is physically present in the data center, in some cases, having been involved with racking, stacking, and/or pre-configuring the first servers with basic services to enable installation of services as requested in the order information 320. In examples, configuring the first servers with basic services includes creating, configuring, and deploying software images (e.g., OS images or images of other apps) to multiple first servers or VMs hosted thereon, in some cases, deployed at scale. In other instances, the user(s) associated with the device(s) 310b is located external to the data center. In some cases, device(s) 310a is associated with a tenant or end-user (e.g., individual customer, a corporation, an educational institution, a government agency, or an agent thereof). In other cases, the device(s) 310a is associated with a service provider agent, representative, or technician. In such instances, particularly where the service provider agent, representative, or technician is physically located in the data center, device(s) 310a and device(s) 310b may be the same device(s), and UI(s) is provided by a web portal or web server that is also located in the data center. Otherwise, device(s) 310a and device(s) 310b are separate devices. With the use of web servers/portals, UIs, and/or monitoring systems that are local to a data center, even if network connectivity is not available for the data center, locally present users may still have access to UIs for managing the buildout and/or run state operations, thus enabling local backup to network-based or cloud-based buildout and/or run state operations.

In examples, the data 325 includes at least one of a number of each type of server, information regarding types of servers, information regarding models of servers, or a unique code (e.g., stock keeping unit ("SKU") or similar identifier or code) identifying characteristics of each model of server. In some cases, the data 325 is included in, or contained within, an extensible markup language ("XML") file or other data file. In examples, the basic services include at least one of network functionalities, software, apps, or configurations of network functionalities, software, apps, or server components. In some examples, the basic services further include at least one of an operating system, a native hypervisor (e.g., Hyper-V^{®} or another hypervisor), a server update services computer program (e.g., WSUS or similar update services), an extensible web server (e.g., IIS or similar servers or services), firewall configurations, firewall settings, antivirus software, diagnostic software, workload installations, initial daemons, cron jobs, basic network configurations (e.g., Internet protocol ("IP") addresses, domain controller settings), or proxy configurations.

In an example, after receiving the order information 320 and the data 325, orchestrator 305 receives configuration file(s) 330a and updates configuration file(s) 330a with the server-specific information (e.g., MAC addresses, hardware or resource-related information for the specific servers, or similar information) derivable from the data 325 to generate configuration file(s) 330b. Alternatively, in another example, after receiving the order information 320 and the data 325, orchestrator 305 generates configuration file(s) 330b based on the order information 320 and the server-specific information derivable from the data 325.

At operation 335, orchestrator determines whether characteristics of the first servers are consistent with the configuration file(s) 330b. Based on a determination that the characteristics of the first servers are consistent with the configuration file(s) 330b, orchestrator proceeds to orchestrate configuration of the first servers (at operation 340), by configuring the first servers using first configurations and by installing first services, in accordance with the configuration file(s) 330b. The example sequence flow 300 then continues onto the process at operation 355. On the other hand, based on a determination that the characteristics of the first servers are inconsistent with the configuration file(s) 330b, orchestrator 305 may send a message to a user (e.g., user associated with at least device(s) 310b or other service provider agent(s), representative(s), or technician(s)) requesting information as to other servers (either among the plurality of first servers or other data center servers) to configure. Alternatively or additionally, based on the determination that the characteristics of the first servers are inconsistent with the configuration file(s) 330b, orchestrator 305 may identify second servers among the plurality of first servers, and may orchestrate configuration of the second servers (at operation 350), in a manner similar to the process at operation 340.

During either buildout operations phase and/or run state operations phase (which occurs weeks, months, or years following the buildout operations phase), processes for ensuring consistency with the configuration file(s) are implemented, as shown in Fig. 3 with respect to the processes at operations 355-370. At operation 355, a monitoring system(s) (e.g., monitoring system(s) 125 or 125a or Fig. 1) monitors server configurations for any changes or inconsistencies with respect to the configuration file(s) 330b. It is determined, either by the monitoring system(s) or the orchestrator 305, whether server configurations have changed or are otherwise inconsistent with the configurations as outlined in the configuration file(s) 330b (at operation 360). If the server configurations of the plurality of first servers are determined to be unchanged from, or to be consistent with, the configurations as outlined in the configuration file(s) 330b, the process returns to the monitoring at operation 355. On the other hand, if the server configurations of at least one server among the plurality of first servers are determined to have changed from, or to be inconsistent with, the configurations as outlined in the configuration file(s) 330b, the orchestrator 305 would orchestrate reconfiguration of the corresponding first or second server among the at least one server to (once again) be consistent with the configurations as outlined in the configuration file(s) 330b. During either phase, the orchestrator 305 (or a server) (collectively, "computing system"; e.g., orchestrator 105 or 105a, web server(s) 120 or 120a, servers 135a-135x, 210a-210k, and 210a-210o of Figs. 1 and 2), in some cases, using an app or a UI (e.g., UI(s) 115 and 315 of Figs. 1 and 3), may generate and provide for presentation a dashboard UI to the device(s) 310b, a web portal, or the app. In examples, the dashboard UI is configured to display at least one of status information regarding configuration of each of the plurality of first servers within the data center or status information regarding first services that are installed on each of the plurality of first servers.

Although not shown, a user may update the configuration file(s) 330b (e.g., buildout configuration file(s) and/or run state configuration file(s)), and may request reconfiguration of the first or second servers based on the updated configuration file(s). The buildout operations and run state operations described herein are designed to handle updating of configuration files in this manner, while correcting or resetting configurations that fall outside the scope of the configuration files, particularly where such deviations are caused by system administrators preforming ad hoc changes to the configurations and services of the plurality of first servers in the data center.

In various aspects, the buildout operations and run state operations are modularized relative to baseline configuration requirements. Modularizing buildout operations and run state operations allow for separate program functionality, providing building blocks containing aspects necessary for distinct execution. In some examples, buildout configurations and run state configurations may be implemented as distinct configurations during the corresponding buildout and run state operations.

In some examples, a buildout operations module, which may be used for implementing buildout operations, includes code that controls the building of an environment, outlining the type and quantity of physical servers, virtual machines, etc. The buildout of a new data center, cloud, or region in a cloud can be implemented in a phased approach and can allow for connecting anywhere along the line. A first phase allows for a completely new buildout, during which racking and stacking of physical equipment, networking, imaging, and provisioning an automation server, a DSC server, and/or a cross-platform task automation server are performed to begin configuring initial or basic services and to provide a connection to a public cloud or other public network, allowing for the environment to reach a run state. Once connected to the public cloud or other public network, a buildout configuration file provides buildout information including IP addresses, MAC addresses, organization unit(s) ("OU(s)"), type, quantity, etc., then begins to configure the physical servers and builds the virtual machines necessary for service completion, leveraging cloud services for governing, protection, and configuration using orchestration of runbooks that serve as a comprehensive, step-by-step guide that outlines tasks and their dependencies for implementing the buildout and/or run state operations.

In examples, a run state operations module, which may be used for implementing run state operations and may be disposed within a boundary of a data center(s) of the built-out cloud network, includes code that controls day-to-day operations of the data center(s) of the cloud network. A run state configuration file, which is similar to the buildout configuration file, provides run state configurations including IP addresses, MAC addresses, OS features to install, what and how many types to stand up and configure, ports to open or block, firewall configurations, virtual local area network ("VLAN"), server name, etc. If a need to build more servers for maintenance and/or management activities arises, the run state configuration file can be modified to allow for scaling.

When a configuration change of a virtual machine type is necessary, the modifications are made by the buildout operation owner and pushed to the affected data center(s). In examples, the buildout operation owner controls what the virtual machine type looks like (including defining each virtual machine and each physical host), while the run state operation owner controls the how many virtual machines of what type are needed for scaling. Upon completion of installation and configuration of basic services (e.g., initial dial tone services) by a first team (e.g., a pre-installation team) during buildout operations, the environment can be managed by a next team (e.g., a buildout operations team) to begin their processes in standing up the cloud network, leveraging the configuration file model to perform the same installation and configurations of the services necessary to build the cloud. When completed and available in the boundary, the environment can disconnect from the public cloud and rely on cloud services in the boundary for the remainder of the lifecycle of the cloud network.

To ensure continual configuration and prevention of configuration creep if cloud connectivity is lost, a backup or local orchestrator (e.g., an automation server, a DSC server, and/or a cross-platform task automation server) can be provided in the boundary of the data center(s). Automated scripts can monitor a "heartbeat" to ensure connectivity to the cloud network is active, and when connectivity is lost, the physical servers and virtual machines within the boundary can be redirected to the backup or local orchestrator to maintain configuration until cloud restoration is complete.

In examples, physical and/or virtual servers may be added over time to a data center, region, and/or cloud network. Within a data center, the physical servers may be fully replaced over a period of years. In some instances, the buildout operations are implemented with or on new or replacement servers, while the run state operations are implemented with or on existing servers. At certain points in the lifetime of a data center, 100% of the physical servers will have been purchased, installed, configured, used, and then retired. Automation of the buildout and run state operations continue with new servers being added to the configuration file and retired servers being removed.

These and other functions of the example sequence flow 300 (and its components) are described in greater detail herein with respect to Figs. 1, 2A-2E, and4A-4D.

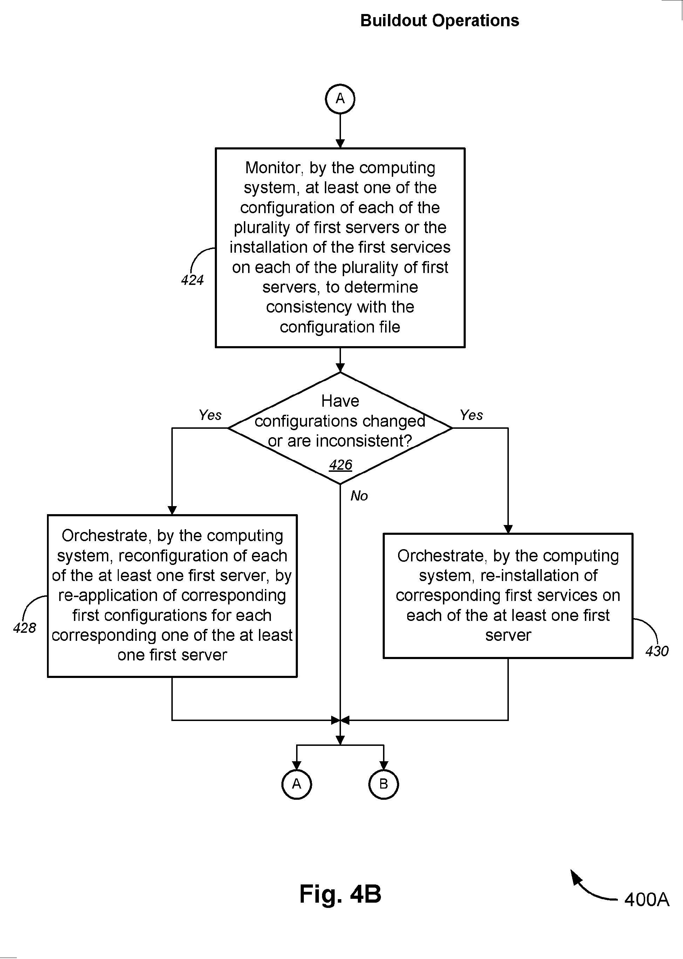

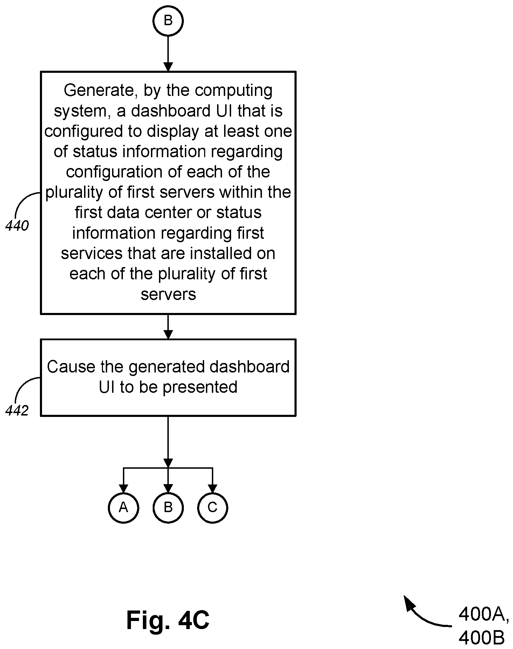

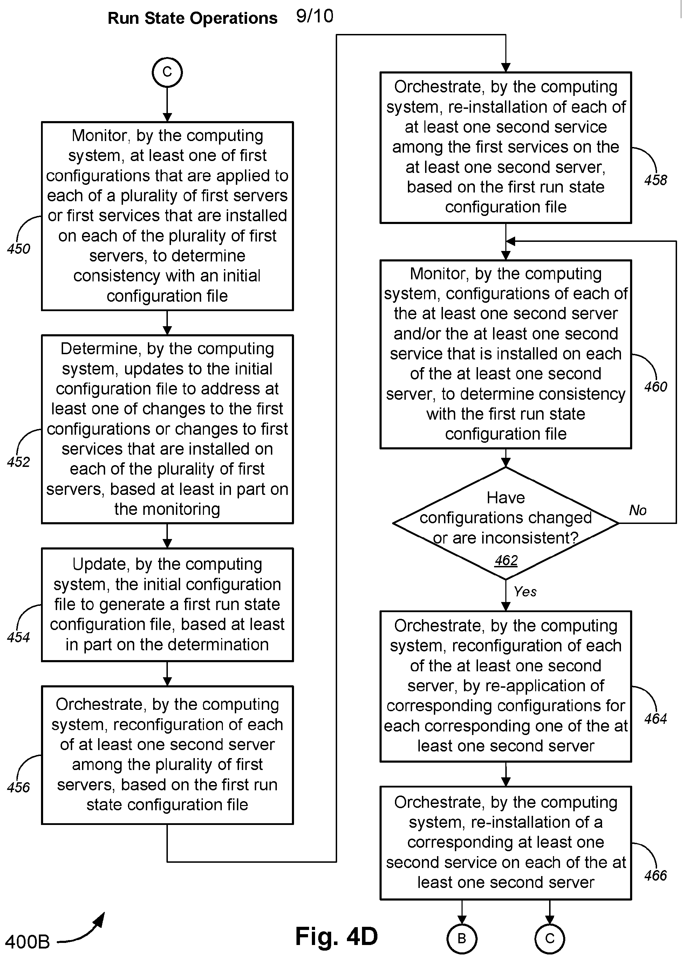

Figs. 4A-4D depict various example methods 400A and 400B for implementing automated cloud buildout and/or run state management using cloud hosted orchestration of configuration and installation of cloud services. In particular, Figs. 4A and 4B are directed to example method 400A for implementing automated cloud buildout, while Fig. 4D is directed to example method 400B for implementing automated cloud run state management, and Fig. 4C is applicable to either example method 400A for implementing automated cloud buildout and/or example method 400B for implementing automated cloud run state management.

In the embodiment of Fig. 4A, method 400A, at operation 402, includes receiving, by a computing system (e.g., orchestrator 105 or 105a, web server(s) 120 or 120a, servers 135a-135x, 210a-210k, and 210a-210o of Figs. 1 and 2) and from a device (e.g., devices 150a-150w and 310a-310b of Figs. 1 and 3), order information regarding numbers and characteristics of a plurality of first servers for a cloud network to be established. For example, the order information includes at least one of information regarding types of services, information regarding type of operating system, information regarding a number of servers, MAC addresses to be assigned to the plurality of first servers, information regarding types of computing resources to be allocated to the first servers, information regarding amounts of computing resources to be allocated to the first servers, or information regarding amounts of memory or data storage resources to be allocated to the first servers. In examples, the computing system includes at least one of an orchestrator, a server, an AI and/or ML system, a cloud computing system, or a distributed computing system. At operation 404, method 400A includes generating, by the computing system, a configuration file based at least in part on the received order information. The configuration file outlines configurations and services to be applied to each of a plurality of first servers that is installed within a first data center. Alternative to generating the configuration file based on order information (at operations 402 and 404), method 400A further includes, at operation 406, receiving, by the computing system, the configuration file, e.g., from a data source (e.g., an external orchestrator, a data storage device, a configuration file generator, or the device).

Subsequent to the process at operation 404 or the process at operation 406, method 400A further includes receiving, by the computing system, first data regarding the plurality of first servers, the plurality of first servers having been preconfigured with basic services to enable installation of the first services (at operation 408). In examples, the basic services include at least one of network functionalities, software, apps, or configurations of network functionalities, software, apps, or server components. In some examples, the basic services further include at least one of an operating system, a native hypervisor (e.g., Hyper-V^{®} or another hypervisor), a server update services computer program (e.g., WSUS or similar update services), an extensible web server (e.g., IIS or similar servers or services), firewall configurations, firewall settings, antivirus software, diagnostic software, workload installations, initial daemons, cron jobs, basic network configurations (e.g., IP addresses, domain controller settings), or proxy configurations. In examples, the first data includes at least one of a number of each type of server, information regarding types of servers, information regarding models of servers, or a unique code (e.g., SKU or similar identifier or code) identifying characteristics of each model of server. At operation 410, method 400A further includes updating, by the computing system, the configuration file with the received first data to tailor the configuration file to the plurality of first servers, in some cases, tailoring the configuration file at least with respect to identifiers of the first servers (e.g., MAC addresses).

Method 400A, at operation 412, includes determining, by the computing system, whether characteristics of first particular servers among the plurality of first servers are consistent with corresponding first configurations for application on the first particular servers as outlined in the configuration file. Based on a determination that characteristics of the first particular servers are consistent with corresponding first configurations for application on the first particular servers as outlined in the configuration file, method 400A continues onto the process at operation 414. Based on a determination that characteristics of the first particular servers are inconsistent with corresponding first configurations for application on the first particular servers as outlined in the configuration file, method 400A either continues onto the process at operation 418 and/or continues onto the process at operation 420.

At operation 414, method 400A includes, based on a determination that characteristics of the first particular servers are consistent with corresponding first configurations for application on the first particular servers as outlined in the configuration file, orchestrating, by the computing system, application of corresponding first configurations for each of the first particular servers. Method 400A further includes, at operation 416, orchestrating, by the computing system, installation of the first services on each of the first particular servers, based on the configuration file. Method 400A either continues onto the process at operation 424 in Fig. 4B, following the circular marker denoted, "A," or continues onto the process at operation 440 in Fig. 4C, following the circular marker denoted, "B."

Alternatively, at operation 418, method 400A includes, based on a determination that characteristics of the first particular servers are inconsistent with corresponding first configurations for application on the first particular servers as outlined in the configuration file, sending, by the computing system, a message to a user requesting information regarding which other particular servers to configure. Alternatively or additionally, based on a determination that second particular servers among the plurality of first servers have characteristics that are consistent with corresponding first configurations for application on the first particular servers as outlined in the configuration file, method 400A further includes orchestrating, by the computing system, application of first configurations for each of the first particular servers on the second particular servers (at operation 420), and orchestrating, by the computing system, installation of the first services on each of the second particular servers, based on the configuration file (at operation 422). Method 400A either continues onto the process at operation 424 in Fig. 4B, following the circular marker denoted, "A," or continues onto the process at operation 440 in Fig. 4C, following the circular marker denoted, "B."

At operation 424 in Fig. 4B (following the circular marker denoted, "A," in Fig. 4A), method 400 includes monitoring, by the computing system, at least one of (i) the configuration of each of the plurality of first servers or (ii) the installation of the first services on each of the plurality of first servers, to determine consistency with the configuration file. At operation 426, method 400A includes determining, by the computing system, whether configurations applied to each of at least one first server (or the first or second particular servers) among the plurality of first servers are inconsistent, or have been changed compared, with configurations as outlined in the configuration file for a corresponding one of the at least one first server (or the first or second particular servers). Based on a determination that configurations applied to each of at least one first server (or the first or second particular servers) among the plurality of first servers are inconsistent, or have been changed compared, with configurations as outlined in the configuration file for a corresponding one of the at least one first server (or the first or second particular servers), method 400A either continues onto the process at operation 428 and/or continues onto the process at operation 430. Based on a determination that configurations applied to, or that the first services that are installed on, each of at least one first server (or the first or second particular servers) among the plurality of first servers are not inconsistent, or have not been changed compared, with configurations as outlined in the configuration file for a corresponding one of the at least one first server (or the first or second particular servers), method 400A either returns to the process at operation 424, following the circular marker denoted, "A," or continues onto the process at operation 440 in Fig. 4C, following the circular marker denoted, "B."

At operation 428, method 400A includes orchestrating, by the computing system, reconfiguration of each of the at least one first server (or the first or second particular servers), by re-application of corresponding first configurations for each corresponding one of the at least one first server (or the first or second particular servers). Alternatively or additionally, at operation 430, method 400A includes orchestrating, by the computing system, re-installation of corresponding first services on each of the at least one first server (or the first or second particular servers). Method 400A either returns to the process at operation 424, following the circular marker denoted, "A," or continues onto the process at operation 440 in Fig. 4C, following the circular marker denoted, "B."

Turning to Fig. 4C, at operation 440 (following the circular marker denoted, "B," in Figs. 4A and 4B), method 400A includes generating, by the computing system, a dashboard UI that is configured to display at least one of status information regarding configuration of each of the plurality of first servers within the first data center or status information regarding first services that are installed on each of the plurality of first servers. Method 400A further includes, at operation 442, causing the generated dashboard UI to be presented. In an example, causing the generated dashboard UI to be presented includes causing the generated dashboard UI (e.g., UIs 115 or 115a-115c of Fig. 1) to be presented to a device (e.g., devices 150a-150w associated with users 1 to W 155a-155w, respectively, of Fig. 1), via a web portal that is hosted on a web server that is disposed within the first data center (e.g., web server(s) 120a of Fig. 1). In another example, causing the generated dashboard UI to be presented includes causing the generated dashboard UI to be presented to the device, via a web portal that is hosted on a web server that is external to the first data center (e.g., web server(s) 120 of Fig. 1). In yet another example, causing the generated dashboard UI to be presented includes causing the generated dashboard UI to be presented to the device, via an app that is running on the device and that is communicatively coupled to the computing system over at least one network (e.g., cloud network(s) 145a-145z and/or network(s) 130 of Fig. 1).

Method 400A either returns to the process at operation 424 in Fig. 4B, following the circular marker denoted, "A," or returns to the process at operation 440, following the circular marker denoted, "B."

With reference to the embodiment of Fig. 4D, method 400B, at operation 450, includes monitoring, by the computing system, at least one of first configurations that are applied to each of a plurality of first servers or first services that are installed on each of the plurality of first servers, to determine consistency with an initial configuration file (e.g., configuration file that is generated (e.g., at operation 404) or received (e.g., at operation 406) during buildout operations. At operation 452, method 400B includes determining, by the computing system, updates to the initial configuration file to address at least one of changes to the first configurations (or the initial configurations) or changes to the first services that are installed on each of the plurality of first servers, based at least in part on the monitoring (from operation 450).

Method 400B further includes updating, by the computing system, the initial configuration file to generate a first run state configuration file (at operation 454), based at least in part on the determination (from operation 452); and orchestrating, by the computing system, reconfiguration of each of at least one second server among the plurality of first servers (at operation 456), based on the first run state configuration file (from operation 454). In examples, method 400B further includes, at operation 458, orchestrating, by the computing system, re-installation of each of at least one second service among the first services on the at least one second server, based on the first run state configuration file (from operation 454).

At operation 460, method 400B includes monitoring, by the computing system, configurations of each of the at least one second server and/or the at least one second service that is installed on each of the at least one second server, to determine consistency with the first run state configuration file. Method 400B, at operation 462, includes determining, by the computing system, whether configurations applied to each of at least one second server are inconsistent, or have been changed compared, with configurations as outlined in the configuration file for a corresponding one of the at least one second server. Based on a determination that configurations applied to each of at least one second server are not inconsistent, or have not been changed compared, with configurations as outlined in the configuration file for a corresponding one of the at least one second server, method 400B returns to the process at operation 460. Based on a determination that configurations applied to each of at least one second server are inconsistent, or have been changed compared, with configurations as outlined in the configuration file for a corresponding one of the at least one second server, method 400A continues onto the process at operation 464. At operation 464, method 400B includes orchestrating, by the computing system, reconfiguration of each of the at least one second server, by re-application of corresponding configurations for each corresponding one of the at least one second server as outlined in the first run state configuration file (from operation 454). At operation 466, method 400B includes orchestrating, by the computing system, re-installation of a corresponding at least one second service on each of the at least one second server, also as outlined in the first run state configuration file (from operation 454). In an example, method 400B returns to the process at operation 440 in Fig. 4C following the circular marker denoted, "B," which subsequent to operations 440 and 442 (as applied to the at least one second server and the at least one second service) returns to the process at operation 440 in Fig. 4C, following the circular marker denoted, "B," or the process at operation 450 in Fig. 4D, following the circular marker denoted, "C." In another example, turning back to Fig. 4D, method 400B returns to the process at operation 450, following the circular marker denoted, "C."

While the techniques and procedures in methods 400A, 400B are depicted and/or described in a certain order for purposes of illustration, it should be appreciated that certain procedures may be reordered and/or omitted within the scope of various embodiments. Moreover, while the methods 400A, 400B may be implemented by or with (and, in some cases, are described below with respect to) the systems, examples, or embodiments 100, 200A, 200B, 200C, 200D, 200E, 300 of Figs. 1, 2A, 2B, 2C, 2D, 2E, and 3, respectively (or components thereof), such methods may also be implemented using any suitable hardware (or software) implementation. Similarly, while each of the systems, examples, or embodiments 100, 200A, 200B, 200C, 200D, 200E, 300 of Figs. 1, 2A, 2B, 2C, 2D, 2E, and 3, respectively (or components thereof), can operate according to the methods 400A, 400B (e.g., by executing instructions embodied on a computer readable medium), the systems, examples, or embodiments 100, 200A, 200B, 200C, 200D, 200E, 300 of Figs. 1, 2A, 2B, 2C, 2D, 2E, and 3 can each also operate according to other modes of operation and/or perform other suitable procedures.

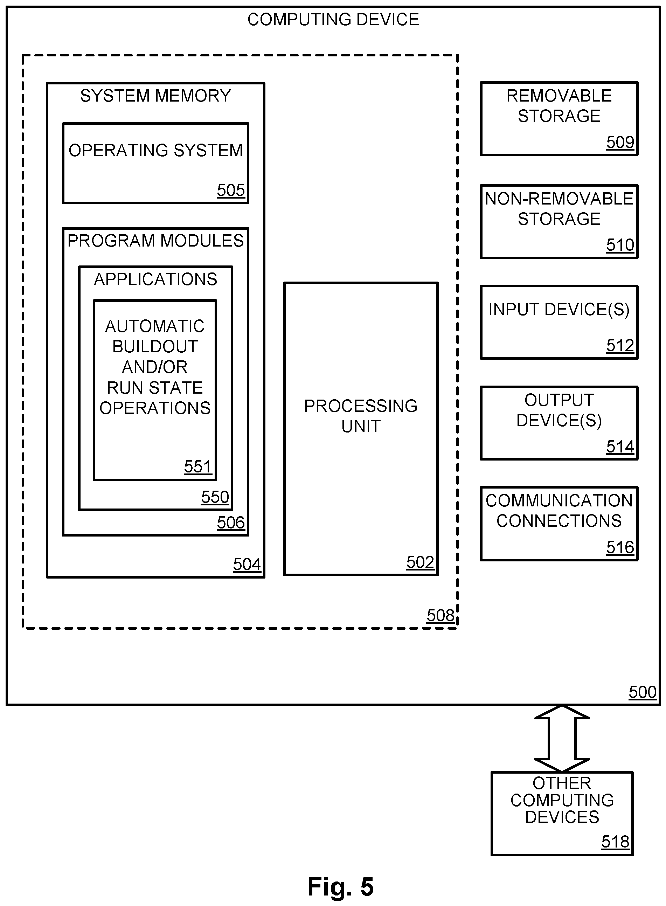

Fig. 5 depicts a block diagram illustrating physical components (i.e., hardware) of a computing device 500 with which examples of the present disclosure may be practiced. The computing device components described below may be suitable for a client device implementing the automated cloud buildout and/or run state management using cloud hosted orchestration of configuration and installation of cloud services, as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as automatic buildout and/or run state operations 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Figs. 4A-4E, or one or more operations of the system(s) and/or apparatus(es) as described with respect to Figs. 1-3, or the like. Other program modules that may be used in accordance with examples of the present disclosure may include applications such as electronic mail and contacts applications, word processing applications, spreadsheet applications, database applications, slide presentation applications, drawing or computer-aided application programs, artificial intelligence ("AI") applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via a system-on-a-chip ("SOC") where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include random access memory ("RAM"), read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

As should be appreciated from the foregoing, the present technology provides multiple technical benefits and solutions to technical problems. For instance, implementing cloud buildout and/or run state management generally raises multiple technical problems. For instance, one technical problem includes configuration creep that may occur due to ad hoc changes to configurations of servers of a data center(s) by administrators that are inconsistent with configurations as outlined in a configuration file. Another technical problem includes non-scalability of the cloud buildout and/or run state management due to such operations being typically manually performed, which can be repetitive, tedious, expensive, prone to human error, and time consuming. Building out additional cloud networks compounds this manually implemented operations. The present technology provides for implementing automated cloud buildout and/or run state management using cloud hosted orchestration of configuration and installation of cloud services. In some examples, a configuration file is used by a computing system to orchestrate configuration or reconfiguration of servers that are installed within a data center (including virtual machines hosted thereon) during buildout operations and/or run state operations of a cloud network(s). The configuration file outlines configurations and services to be applied to each server. The computing system or a monitoring system monitors configurations of the servers or services/apps installed thereon to determine whether changes have been made, or whether the configurations are inconsistent, as outlined in the configuration file. If the configurations have been changed or are otherwise inconsistent with the configuration file, the computing system automatically restores, resets, or reconfigures the servers or services/apps to be consistent with the configurations and/or services as outlined in the configuration file. The computing system accepts updated configuration files when changes to the configurations are required or requested. A user interface may be provided to display statuses of the buildout operations and/or the run state operations.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where n denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., *s, t, u, v, w, x, y,* and/or z) may similarly denote non-negative integer numbers that (together with n or other like suffixes) may be either all the same as each other, all different from each other, or some combination of same and different (e.g., one set of two or more having the same values with the others having different values, a plurality of sets of two or more having the same value with the others having different values, etc.).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

Alternatively or in addition to the other examples described herein, examples include any combination of the following clauses:
Clause A. A method, comprising: receiving, by a computing system, a configuration file outlining configurations and services to be applied to each of a plurality of first servers that is installed within a first data center; orchestrating, by the computing system, at least one of: configuration of each of the plurality of first servers, by application of corresponding first configurations for each of the plurality of first servers; or installation of first services on each of the plurality of first servers, based on the configuration file; monitoring, by the computing system, at least one of the configuration of each of the plurality of first servers or the first services that are installed on each of the plurality of first servers, to determine consistency with the configuration file; and based on a determination that configurations applied to a first server among the plurality of first servers are inconsistent with configurations as outlined in the configuration file for the first server, orchestrating, by the computing system, reconfiguration of the first server, by re-application of corresponding first configurations for the first server.
Clause B. The method of clause A, further comprising: based on a determination that the first services that are installed on the first server are inconsistent with the first services that are selected for installation on the first server as outlined in the configuration file, orchestrating, by the computing system, re-installation of corresponding first services on the first server.
Clause C. The method of clause A or clause B, further comprising: receiving, by the computing system and from a device, order information regarding numbers and characteristics of the plurality of first servers for a cloud network to be established; and generating, by the computing system, the configuration file based at least in part on the received order information.
Clause D. The method of clause C, wherein the order information includes at least one of information regarding types of services, information regarding type of operating system, information regarding a number of servers, media access control ("MAC") addresses to be assigned to the plurality of first servers, information regarding types of computing resources to be allocated to the first servers, information regarding amounts of computing resources to be allocated to the first servers, or information regarding amounts of memory or data storage resources to be allocated to the first servers.
Clause E. The method of any preceding clause, further comprising: receiving, by the computing system, first data regarding the plurality of first servers, the plurality of first servers having been preconfigured with basic services to enable installation of the first services; updating, by the computing system, the configuration file with the first data to tailor the configuration file to the plurality of first servers; determining, by the computing system, whether characteristics of first particular servers among the plurality of first servers are consistent with corresponding first configurations for application on the first particular servers as outlined in the configuration file; and based on a determination that characteristics of the first particular servers are consistent with corresponding first configurations for application on the first particular servers as outlined in the configuration file, orchestrating, by the computing system, application of corresponding first configurations for each of the first particular servers, and orchestrating, by the computing system, installation of the first services on each of the first particular servers, based on the configuration file.
Clause F. The method of clause E, further comprising: based on a determination that characteristics of the first particular servers are inconsistent with corresponding first configurations for application on the first particular servers as outlined in the configuration file, performing at least one of: sending, by the computing system, a message to a user requesting information regarding which other particular servers to configure; or determining, by the computing system, whether second particular servers among the plurality of first servers have characteristics that are consistent with corresponding first configurations for application on the first particular servers as outlined in the configuration file; and orchestrating, by the computing system, application of first configurations for each of the first particular servers on the second particular servers, and orchestrating, by the computing system, installation of the first services on each of the second particular servers, based on the configuration file.
Clause G. The method of clause E or clause F, wherein the basic services include at least one of network functionalities, software, software applications ("apps"), or configurations of network functionalities, software, apps, or server components, wherein the basic services further include at least one of an operating system, a native hypervisor, a server update services computer program, an extensible web server, firewall configurations, firewall settings, antivirus software, diagnostic software, workload installations, initial daemons, cron jobs, basic network configurations, or proxy configurations.
Clause H. The method of any of clauses E to G, wherein the first data includes at least one of a number of each type of server, information regarding types of servers, information regarding models of servers, or a unique code identifying characteristics of each model of server.
Clause I. The method of any preceding clause, further comprising: generating, by the computing system, a dashboard user interface ("UI") that is configured to display at least one of status information regarding configuration of each of the plurality of first servers within the first data center or status information regarding first services that are installed on each of the plurality of first servers; and causing the generated dashboard UI to be presented.
Clause J. The method of clause A, wherein causing the generated dashboard UI to be presented includes at least one of: causing the generated dashboard UI to be presented, via a web portal that is hosted on a web server that is disposed within the first data center; causing the generated dashboard UI to be presented, via a web portal that is hosted on a web server that is external to the first data center; or causing the generated dashboard UI to be presented, via an app that is running on the device and that is communicatively coupled to the computing system over at least one network.
Clause K. The method of any preceding clause, wherein the configuration file further outlines configurations and services to be applied to servers that are installed in another data center, in a plurality of data centers within a first region, or in data centers within each of a plurality of regions within a first country or first continent.
Clause L. The method of any preceding clause, wherein inconsistency with the configurations as outlined in the configuration file or inconsistency with the first services that are selected for installation on the first server as outlined in the configuration file is in response to ad hoc changes made by a user outside a scope of the configurations and services as outlined in the configuration file.
Clause M. A system, comprising: a processing system; and memory coupled to the processing system, the memory comprising computer executable instructions that, when executed by the processing system, causes the system to perform buildout operations comprising: receiving first data regarding a plurality of first servers installed within a first data center, the plurality of first servers having been preconfigured with basic services to enable installation of first services; receiving a configuration file outlining configurations and services to be applied to each of the plurality of first servers; updating the configuration file with the received first data to tailor the configuration file to the plurality of first servers; determining whether characteristics of first particular servers among the plurality of first servers are consistent with corresponding configurations for application on the first particular servers as outlined in the configuration file; based on a determination that characteristics of the first particular servers are consistent with corresponding configurations for application on the first particular servers as outlined in the configuration file, orchestrating application of corresponding configurations for each of the first particular servers and orchestrating installation of the first services on each of the first particular servers, based on the configuration file; monitoring the configurations applied to each of the plurality of first servers to determine whether the monitored configurations are consistent with corresponding configurations as outlined in the configuration file; and based on a determination that configurations of a first server among the plurality of first servers is inconsistent with configurations as outlined in the configuration file for the first server, reconfiguring the first server based on the configuration file, and logging a report in an incident log.
Clause N. The system of clause M, wherein the buildout operations further comprise: based on a determination that characteristics of the second particular servers are inconsistent with corresponding configurations for application on the second particular servers as outlined in the configuration file, performing at least one of: sending a message to a user requesting information regarding which other particular servers to configure; or determining whether third particular servers among the plurality of first servers have characteristics that are consistent with corresponding configurations for application on the second particular servers as outlined in the configuration file; and orchestrating application of configurations for each of the second particular servers on the third particular servers, and orchestrating installation of second services among the first services on each of the third particular servers, based on the configuration file.
Clause O. The system of clause M or clause N, wherein the buildout operations further comprise: monitoring the first services that have been installed on each of the plurality of first servers to determine whether the first services are consistent with corresponding services as outlined in the configuration file; and based on a determination that the first services that are installed on the first server are inconsistent with the first services that are selected for installation on the first server as outlined in the configuration file, orchestrating re-installation of corresponding first services on the first server.
Clause P. The system of clauses M to O, wherein the buildout operations further comprise: generating a buildout dashboard user interface ("UI") that is configured to display at least one of status information regarding configuration of each of the plurality of first servers within the first data center or status information regarding installation of first services on each of the plurality of first servers; and presenting the generated buildout dashboard UI to a user.
Clause Q. A computer-implemented method, comprising: performing run state operations of first cloud network, the run state operations comprising: monitoring at least one of first configurations that are applied to each of a plurality of first servers or first services that are installed on each of the plurality of first servers, to determine consistency with an initial configuration file; determining updates to the initial configuration file to address at least one of changes to the first configurations or changes to first services that are installed on each of the plurality of first servers, based at least in part on the monitoring; updating the initial configuration file to generate a first run state configuration file, based at least in part on the determination; and orchestrating reconfiguration of a second server among the plurality of first servers, based on the first run state configuration file.
Clause R. The computer-implemented method of clause Q, further comprising: orchestrating re-installation of a second service among the first services on the at least one second server, based on the run state configuration file.
Clause S. The computer-implemented method of clause R, further comprising: monitoring one or more of: configurations of the second server; or the at least one second service that is installed on the second server, to determine consistency with the run state configuration file or whether configurations or services have been changed; and performing at least one of: based on a determination that configurations applied to a second server are inconsistent, or have been changed compared, with configurations as outlined in the run state configuration file for a corresponding one of the at least one second server, orchestrating reconfiguration of the second server, by re-application of corresponding configurations for each corresponding one of the at least one second server; or based on a determination that the at least one second service that is installed on the second server is inconsistent, or have been changed compared, with the at least one second service that is selected for installation on the second server as outlined in the run state configuration file, orchestrating re-installation of a corresponding at least one second service on the second server.
Clause T. The computer-implemented method of any of clauses Q to S, further comprising: generating a run state dashboard user interface ("UI") that is configured to display at least one of: information regarding configurations of each of the plurality of first servers; information regarding services installed on each of the plurality of first servers; status information regarding configuration of the second server; or status information regarding the at least one second service that is installed on the second server; and presenting the generated run state dashboard UI to a device associated with a user.

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the broader aspects of the general inventive concept embodied in this application that do not depart from the broader scope of the claimed invention.

## Claims

1. A method (400), comprising:
receiving (406), by a computing system, a configuration file outlining configurations and services to be applied to each of a plurality of first servers that is installed within a first data center;
orchestrating, by the computing system, at least one of:
configuration (414) of each of the plurality of first servers, by application of
corresponding first configurations for each of the plurality of first servers; or installation (416) of first services on each of the plurality of first servers, based on
the configuration file;
monitoring (424), by the computing system, at least one of the configuration of each of the plurality of first servers or the first services that are installed on each of the plurality of first servers, to determine consistency with the configuration file; and
based on a determination that configurations applied to a first server among the plurality of first servers are inconsistent with configurations as outlined in the configuration file for the first server, orchestrating, by the computing system, reconfiguration (428) of the first server, by re-application of corresponding first configurations for the first server.

2. The method of claim 1, further comprising:
based on a determination that the first services that are installed on the first server are inconsistent with the first services that are selected for installation on the first server as outlined in the configuration file, orchestrating, by the computing system, re-installation of corresponding first services on the first server.

3. The method of claim 1 or claim 2, further comprising:
receiving, by the computing system and from a device, order information regarding numbers and characteristics of the plurality of first servers for a cloud network to be established; and
generating, by the computing system, the configuration file based at least in part on the received order information.

4. The method of claim 3, wherein the order information includes at least one of information regarding types of services, information regarding type of operating system, information regarding a number of servers, media access control "MAC" addresses to be assigned to the plurality of first servers, information regarding types of computing resources to be allocated to the first servers, information regarding amounts of computing resources to be allocated to the first servers, or information regarding amounts of memory or data storage resources to be allocated to the first servers.

5. The method of any preceding claim, further comprising:
receiving, by the computing system, first data regarding the plurality of first servers, the plurality of first servers having been preconfigured with basic services to enable installation of the first services;
updating, by the computing system, the configuration file with the first data to tailor the configuration file to the plurality of first servers;
determining, by the computing system, whether characteristics of first particular servers among the plurality of first servers are consistent with corresponding first configurations for application on the first particular servers as outlined in the configuration file; and
based on a determination that characteristics of the first particular servers are consistent with corresponding first configurations for application on the first particular servers as outlined in the configuration file, orchestrating, by the computing system, application of corresponding first configurations for each of the first particular servers, and orchestrating, by the computing system, installation of the first services on each of the first particular servers, based on the configuration file.

6. The method of claim 5, further comprising:
based on a determination that characteristics of the first particular servers are inconsistent with corresponding first configurations for application on the first particular servers as outlined in the configuration file, performing at least one of:
sending, by the computing system, a message to a user requesting information regarding which other particular servers to configure; or
determining, by the computing system, whether second particular servers among the plurality of first servers have characteristics that are consistent with corresponding first configurations for application on the first particular servers as outlined in the configuration file; and orchestrating, by the computing system, application of first configurations for each of the first particular servers on the second particular servers, and orchestrating, by the computing system, installation of the first services on each of the second particular servers, based on the configuration file.

7. The method of claim 5 or claim 6, wherein the basic services include at least one of network functionalities, software, software applications "apps", or configurations of network functionalities, software, apps, or server components, wherein the basic services further include at least one of an operating system, a native hypervisor, a server update services computer program, an extensible web server, firewall configurations, firewall settings, antivirus software, diagnostic software, workload installations, initial daemons, cron jobs, basic network configurations, or proxy configurations.

8. The method of any of claims 5 to 7, wherein the first data includes at least one of a number of each type of server, information regarding types of servers, information regarding models of servers, or a unique code identifying characteristics of each model of server.

9. The method of any preceding claim, further comprising:
generating, by the computing system, a dashboard user interface "UI" that is configured to display at least one of status information regarding configuration of each of the plurality of first servers within the first data center or status information regarding first services that are installed on each of the plurality of first servers; and
causing the generated dashboard UI to be presented.

10. The method of any preceding claim, wherein causing the generated dashboard UI to be presented includes at least one of:
causing the generated dashboard UI to be presented, via a web portal that is hosted on a web server that is disposed within the first data center;
causing the generated dashboard UI to be presented, via a web portal that is hosted on a web server that is external to the first data center; or
causing the generated dashboard UI to be presented, via an app that is running on the device and that is communicatively coupled to the computing system over at least one network.

11. The method of any preceding claim, wherein the configuration file further outlines configurations and services to be applied to servers that are installed in another data center, in a plurality of data centers within a first region, or in data centers within each of a plurality of regions within a first country or first continent.

12. The method of any preceding claim, wherein inconsistency with the configurations as outlined in the configuration file or inconsistency with the first services that are selected for installation on the first server as outlined in the configuration file is in response to ad hoc changes made by a user outside a scope of the configurations and services as outlined in the configuration file.

13. A system (100), comprising:
a processing system (502); and
memory (504) coupled to the processing system, the memory comprising computer executable instructions that, when executed by the processing system, causes the system to perform buildout operations comprising:
receiving (408) first data regarding a plurality of first servers installed within a first data center, the plurality of first servers having been preconfigured with basic services to enable installation of first services;
receiving (406) a configuration file outlining configurations and services to be applied to each of the plurality of first servers;
updating (410) the configuration file with the received first data to tailor the configuration file to the plurality of first servers;
determining (412) whether characteristics of first particular servers among the plurality of first servers are consistent with corresponding configurations for application on the first particular servers as outlined in the configuration file;
based on a determination that characteristics of the first particular servers are consistent with corresponding configurations for application on the first particular servers as outlined in the configuration file, orchestrating (414) application of corresponding configurations for each of the first particular servers and orchestrating (416) installation of the first services on each of the first particular servers, based on the configuration file;
monitoring (424) the configurations applied to each of the plurality of first servers to determine whether the monitored configurations are consistent with corresponding configurations as outlined in the configuration file; and
based on a determination that configurations of a first server among the plurality of first servers is inconsistent with configurations as outlined in the configuration file for the first server, reconfiguring (428) the first server based on the configuration file, and logging a report in an incident log.

14. The system of claim 13, wherein the buildout operations further comprise:
based on a determination that characteristics of the second particular servers are inconsistent with corresponding configurations for application on the second particular servers as outlined in the configuration file, performing at least one of:
sending a message to a user requesting information regarding which other particular servers to configure; or
determining whether third particular servers among the plurality of first servers have characteristics that are consistent with corresponding configurations for application on the second particular servers as outlined in the configuration file; and orchestrating application of configurations for each of the second particular servers on the third particular servers, and orchestrating installation of second services among the first services on each of the third particular servers, based on the configuration file.

15. A computer-implemented method (400), comprising:
performing run state operations of first cloud network, the run state operations comprising:
monitoring (450) at least one of first configurations that are applied to each of a plurality of first servers or first services that are installed on each of the plurality of first servers, to determine consistency with an initial configuration file;
determining (452) updates to the initial configuration file to address at least one of changes to the first configurations or changes to first services that are installed on each of the plurality of first servers, based at least in part on the monitoring;
updating (454) the initial configuration file to generate a first run state configuration file, based at least in part on the determination; and
orchestrating (456) reconfiguration of a second server among the plurality of first servers, based on the first run state configuration file.
